# EUROPÄISCHE PATENTSCHRIFT

(11) **EP 3 840 898 B1**
(45) Veröffentlichungstag und Bekanntmachung des Hinweises auf die Patenterteilung: **15.01.2025**
(21) Anmeldenummer: 19759321.3
(22) Anmeldetag: 20.08.2019
(51) Int. Cl.: B21D 15/06, B21C 37/20, B21D 17/04, B21D 53/88, B62D 1/19

(54) **LENKWELLE FÜR EIN FAHRZEUG UND EIN VERFAHREN ZUR HERSTELLUNG DGL.**
STEERING SHAFT FOR A VEHICLE AND METHOD FOR PRODUCING SAID STEERING SHAFT
COLONNE DE DIRECTION POUR VÉHICULE ET PROCÉDÉ POUR SA FABRICATION

(30) Priorität: 21.08.2018 DE 102018120314
(43) Veröffentlichungstag der Anmeldung: 30.06.2021
(73) Patentinhaber: thyssenkrupp Presta AG, 9492 Eschen (LI); thyssenkrupp AG, 45143 Essen (DE)
(72) Erfinder: ENDERLIN, Simon, 9473 Gams (CH); IGRAS, Adam, 9500 Wil (CH)
(74) Vertreter: thyssenkrupp Intellectual Property GmbH
(86) Internationale Anmeldenummer: PCT/EP2019/072286
(87) Internationale Veröffentlichungsnummer: WO 2020/038953

(56) Entgegenhaltungen:
- DE-A1- 2 459 246
- DE-C- 800 480
- GB-A- 1 262 913
- US-A- 3 508 633
- US-A- 3 699 624
- US-A- 4 050 326

## Beschreibung

Die Erfindung betrifft eine Lenkwelle für ein Fahrzeug gemäß dem Oberbegriff des Patentanspruchs 1 sowie ein Verfahren zum Herstellen einer Lenkwelle für ein Fahrzeug gemäß dem Oberbegriff des Patentanspruchs 9.

Lenkwellen werden in Fahrzeugen, insbesondere Kraftfahrzeugen eingesetzt, um ein Drehmoment zwischen dem Lenkrad und dem Lenkgetriebe zu übertragen. Lenkwellen sind an ihren Enden mit dem Lenkrad bzw. mit dem Lenkgetriebe verbindbar. Im Fall eines Fahrzeugcrashs, d.h. einer Kollision des Fahrzeugs, kann es zum ungewollten weiteren Eindringen der Lenkwelle in die Fahrgastzelle des Fahrzeugs kommen, wenn das Lenkgetriebe durch den Crash bzw. die Kollision verschoben wird. Dies kann zur Verletzung des Fahrers des Fahrzeugs führen.

Aus dem Stand der Technik sind Lenkwellen mit einem gewellten Abschnitt (Wellrohre) bekannt, wobei sich die Lenkwelle im Fall eines Fahrzeugcrashs im gewellten Bereich verformt, insbesondere staucht oder verbiegt. Durch ein Stauchen oder Verbiegen kann das Eindringen der Lenkwelle in die Fahrgastzelle vermieden oder zumindest abgemildert werden.

Aus der EP 0 661 117 A1 ist ein Verfahren zum Herstellen eines Wellrohres bzw. eines Metallbalgs für Lenksysteme für Kraftfahrzeuge bekannt, bei dem am Außenumfang eines zylindrischen Metallrohrs eine Vielzahl gleichartiger ringförmiger Konkavitäten zur Bildung einer gleichmäßigen Struktur ausgebildet werden, um ein Zwischenerzeugnis zu erhalten. In einem zweiten Schritt wird ein zylindrisches Kerneisen in das Zwischenerzeugnis eingeführt und das Zwischenprodukt in axialer Richtung gestaucht, wobei sich die ringförmigen Konkavitäten radial nach außen verformen.

Die DE 10 2009 024 847 A1 zeigt eine Vorrichtung zur Herstellung wendelförmiger Wellenrohre zur Anpassung der Steigung der Wellung des Wellenrohres.

Aus der US 5,503,431 A ist ein Lenksystem für Kraftfahrzeuge mit einer Zwischenwelle bekannt, die einen zylindrischen Balg aus Metall aufweist, der sich im Fall einer Kollision des Fahrzeugs kontrahiert oder verbiegt, um die Verschiebung des Lenkgetriebes aufgrund des Aufpralls zu absorbieren.

Aus der US 3,699,624 A ist ein Verfahren zum Herstellen von rohrförmigen Rohlingen beispielsweise für Lenkwellen bekannt, wobei jeder rohrförmige Rohling ausgebildet ist, bei einer vorbestimmten axialen Druckbelastung axial zu kollabieren, wozu in einen Abschnitt eine Folge von Senken und Erhebungen eingebracht werden.

In der US 4,050,326 A wird eine Lenksäule beschrieben, die eine axial stauchbare Lenkwelle mit einem die Lenkwelle umgebenden energieabsorbierenden wellenförmigen Verformungselement umfasst.

Eine Lenkwelle mit einem Wellenrohrteil, welches bei einer Stauchbelastung nachgiebig ist, soll mit dem in der DE 24 59 246 A1 offenbarten Außenmantelrohr kostengünstiger hergestellt werden können.

Eine weitere Lenkwelle, die durch einen wellenförmigen Abschnitt bei Druckbelastung stauchbar ausgebildet ist, ist aus der US 3,508,633 A bekannt, wobei die Lenkwelle dabei zudem biegestabil ausgebildet ist.

Aus der GB 1 262 913 A ist des Weiteren ein Verfahren zum Einbringen einer Wellung in ein Rohr, das als stauchbare Lenksäule eingesetzt werden kann, bekannt.

Ein Verfahren zur Herstellung von ringförmig verlaufenden Rillen auf dünnwandigen Rohren ist zudem aus der DE 800 480 C bekannt.

Die aus dem Stand der Technik bekannten Lenkwellen bzw. Verfahren zu deren Fertigung, haben den Nachteil, dass sie aufwändig in der Fertigung sind und die Biegekennlinien der Lenkwellen hohen Schwankungen unterliegen.

Ausgehend von diesem Stand der Technik ist es die Aufgabe der vorliegenden Erfindung, eine Lenkwelle mit einem verbesserten Biegeverhalten, insbesondere einer möglichst genau einstellbaren Biegekennlinie, bereitzustellen. Außerdem soll ein Verfahren zur Fertigung einer solchen Lenkwelle bereitgestellt werden, das insbesondere möglichst einfach ist.

Diese Aufgabe wird durch eine Lenkwelle nach Anspruch 1 und ein Verfahren nach Anspruch 9 gelöst. Vorteilhafte Weiterbildungen ergeben sich aus den jeweiligen Unteransprüchen.

Zur Lösung der Aufgabe wird eine Lenkwelle für ein Fahrzeug vorgeschlagen, umfassend einen rohrförmigen Wellenkörper, der sich entlang einer Längsachse erstreckt und ein erstes Wellenende und ein zweites Wellenende aufweist, wobei zwischen dem ersten Wellenende und dem zweiten Wellenende ein Biegeabschnitt angeordnet ist, wobei der Biegeabschnitt eine Mehrzahl von in Umfangsrichtung des Wellenkörpers verlaufenden Nuten zur Bildung einer Nutenstruktur aufweist, dadurch gekennzeichnet, dass die Nutenstruktur in Richtung der Längsachse ungleichmäßig ausgebildet ist.

Dank der ungleichmäßigen Nutenstruktur in Richtung der Längsachse kann eine Lenkwelle mit einem verbesserten Biegeverhalten, insbesondere einer möglichst genau einstellbaren Biegekennlinie, bereitgestellt werden.

Die Nutenstruktur wird durch die Mehrzahl von in Umfangsrichtung verlaufenden Nuten gebildet, wobei die Nutenstruktur ungleichmäßig ausgebildet ist. Die ungleichmäßige Nutenstruktur kann durch eine heterogene Anordnung und/oder heterogene Ausbildung der einzelnen Nuten zueinander gekennzeichnet sein.

Bevorzugt kann die ungleichmäßige Nutenstruktur dadurch gekennzeichnet sein, dass die Nuten unsymmetrisch bezogen auf eine beliebige Ebene innerhalb des Biegeabschnitts sind, wobei die beliebige Ebene orthogonal zur Längsachse ausgerichtet ist. Die beliebige Ebene ist eine Ebene orthogonal zur Längsachse in einer beliebigen Position bzw. beliebigen Stelle des Biegeabschnitts. Mit anderen Worten existiert keine Ebene innerhalb des Biegeabschnitt, die orthogonal zur Längsachse ausgerichtet ist und zu der die Nuten symmetrisch sind.

Die Nutenstruktur ist vor dem Eintreten eines Crashfalls, also im Normalbetrieb, wenn noch kein Crashfall eingetreten ist, ungleichmäßig ausgebildet. Somit sind ist die Nutenstruktur vor der plastischen Deformation des Biegeabschnitts in einem Crashfall ungleichmäßig. Somit können zumindest zwei Nuten und/oder zumindest zwei Abschnitte zwischen den Nuten unterschiedliche Eigenschaften gegen Zusammendrücken (Stauchen) und/oder gegen Verbiegen aufweisen.

Erfindungsgemäß kann unter einer Nut eine Vertiefung, insbesondere eine Sicke, verstanden werden, die sich zumindest über einen Teil des Umfangs des Wellenkörpers bzw. der Lenkwelle (Umfangsnut bzw. Ringnut) erstreckend ausgebildet ist. Insbesondere liegt die Nut in einer Ebene senkrecht zur Längsachse der Lenkwelle, wobei sie vorzugsweise keine Steigung in Längsrichtung aufweist.

In einer vorteilhaften Weiterbildung kann die Geometrie einer ersten Nut sich von der Geometrie einer zweiten Nut unterscheiden. Somit ist die erste Nut unterschiedlich zu der zweiten Nut ausgebildet, so dass eine ungleichmäßige Nutenstruktur geschaffen ist.

Bevorzugt ist die Geometrie der Nuten hinsichtlich der Form und/oder der Tiefe und/oder der Breite der Nut unterschiedlich. Die Geometrie einer Nut ist insbesondere durch die Form (Querschnitts- bzw. Vertiefungsform), Tiefe, Breite und radiale Ausdehnung (Innendurchmesser oder Außendurchmesser eines Nutbereichs) definiert. Nuten können grundsätzlich in verschiedenen Formen ausgebildet sein, beispielsweise rinnenförmig mit einer gerundeten, kreissegmentförmigen, rechteckigen, trapezförmigen oder dreieckigen Vertiefungsform.

Somit kann es vorgesehen sein, dass die Nuten in einem Längsschnitt entlang der Längsachse einen abweichenden Querschnitt aufweisen, um somit eine ungleichmäßige Nutenstruktur zu bilden.

Alternativ oder zusätzlich kann der Abstand zwischen einer ersten Nut und einer zweiten Nut und der Abstand zwischen der zweiten Nut und einer dritten Nut voneinander unterscheiden.

Der Abstand zwischen zwei Nuten kann erfindungsgemäß der axiale Abstand zwischen den Mittellinien der jeweiligen Nut, die insbesondere entlang der größten Tiefe der jeweiligen Nut verlaufen, sein. Unter der Tiefe einer Nut kann die maximale radiale Ausdehnung der Nut, insbesondere ausgehend von einer Umfangsfläche des Wellenkörpers bzw. der Lenkwelle, verstanden werden. Unter der Breite einer Nut kann die maximale axiale Ausdehnung der Nut (axialer Nutbereich) verstanden werden, insbesondere die Breite der Vertiefung in einer Umfangsfläche des Wellenkörpers bzw. der Lenkwelle. Der Biegeabschnitt umfasst eine Mehrzahl von Nuten, insbesondere zwischen zwei und zehn Nuten.

Der Wellenkörper ist aus einem, vorzugsweise kreiszylindrischen, Rohr gefertigt, vorzugsweise aus einem metallischen Werkstoff wie Stahl oder Aluminium, oder aus einem Faserverbundwerkstoff, und insbesondere als Hohlkörper ausgeführt. Die Ankopplung an ein Lenkrad bzw. ein Lenkgetriebe eines Fahrzeugs kann mittelbar oder unmittelbar, insbesondere über weitere Zwischenwellen, vorzugsweise über mit Gelenken verbindbare Wellenendabschnitte des Wellenkörpers vorgesehen sein.

Von der Erfindung sind unter anderem solche Ausführungsformen umfasst, die Nuten mit voneinander verschiedenen Geometrien (Formen, Tiefen oder Breiten) oder unterschiedlich voneinander beabstandete Nuten aufweisen, als auch Ausführungsformen, die verschiedene Geometrien und verschiedene Abstände miteinander kombinieren.

In einer vorteilhaften Weiterbildung kann es vorgesehen sein, dass die Nuten jeweils unterschiedlich stark lokal verfestigt sind, beispielsweise durch eine entsprechende Umformoperation und/oder durch lokale Laserverfestigung. Eine erste Nut und eine zweite Nut können eine unterschiedliche Härte und/oder Festigkeit und/oder Steifigkeit aufweisen.

Eine erfindungsgemäße Lenkwelle ist insbesondere dazu ausgebildet, sich bei einem Fahrzeugcrash, bei dem insbesondere ein Lenkgetriebe in Richtung des Lenkrades verschoben wird, zu verformen, insbesondere zu verbiegen, um ein Eindringen der Lenkwelle, besser gesagt ein weiteres Eindringen der Lenkwelle als im Normalbetrieb vorgesehen, in den Fahrgastbereich/Fahrgastzelle zu verhindern. Eine Idee der Erfindung ist es, dass das mechanische Biegeverhalten (Biegeverformung) der Lenkwelle durch eine geeignete Gestaltung eines Biegeabschnitts der Lenkwelle durch eine Mehrzahl von Nuten zur Bereitstellung einer ungleichmäßigen Nutenstruktur möglichst genau, d.h. auf das gewünschte Verhalten bei einem Fahrzeugcrash abgestimmt, einstellbar ist. Insbesondere kann der Verlauf des Widerstandsmoments in Längsrichtung, d.h. in Richtung der Längsachse der Lenkwelle konstruktiv festlegbar. Insbesondere ist eine Lenkwelle durch die geeignete Formung von Nuten in einem Biegeabschnitt zur Bildung einer ungleichmäßigen Nutenstruktur so konstruierbar, dass sich eine gewünschte Biegekennlinie der Lenkwelle einstellt. Unter der Biegekennlinie kann die (plastische) Verformung bzw. Verschiebung aufgrund von Biegung in Abhängigkeit der auf die Lenkwelle einwirkenden Kräfte verstanden werden. Außer durch die Wahl des Materials und des Durchmessers der Lenkwelle, ist das Biegeverhalten erfindungsgemäß durch eine geeignete Positionierung des Biegeabschnitts bzw. der Nuten in Längsrichtung sowie durch die Wahl der Anzahl der Nuten, deren Geometrie und deren Abstände zueinander konstruktiv beeinflussbar. Insbesondere ist der Biegebereich dazu ausgelegt, dass sich die erfindungsgemäße Lenkwelle auf Grund der ungleichmäßigen Nutenstruktur im Bereich einer ersten Nut bei geringeren Belastungen zu verformen (verbiegen) beginnt als im Bereich einer zweiten Nut. Eine erfindungsgemäße Lenkwelle hat den Vorteil, dass das Biegeverhalten genau einstellbar ist. Außerdem ist die Lenkwelle einfach herstellbar.

In einer Weiterbildung der Erfindung vergrößert oder verkleinert sich die Tiefe der Nuten, die Breite der Nuten und/oder der Abstand zweier Nuten von einer dem ersten Wellenende zugewandten Seite des Biegeabschnitts zu einer dem zweiten Wellenende zugewandten Seite des Biegeabschnitts hin, vorzugsweise stetig. Insbesondere ändert sich die Geometrie der Nuten bzw. Abstände zwischen (axial benachbarten) Nuten schrittweise (gleichmäßig) von einer Seite des Biegeabschnitts zur anderen, so dass eine ungleichmäßige Nutenstruktur in Richtung der Längsachse ausgebildet ist.

Vorzugsweise sind Nuten auf einer dem Lenkgetriebe zugewandten Seite tiefer und/oder breiter ausgebildet als auf der dem Lenkrad zugewandten Seite des Biegeabschnitts. Vorzugsweise verkleinern sich die Abstände zwischen den Nuten von einer dem Lenkgetriebe zugewandten Seite zur dem Lenkrad zugewandten Seite des Biegeabschnitts hin. Auf diese Weise kann eine möglichst genaue Einstellung des Biegeverhaltens der Lenkwelle erreicht werden, insbesondere ein kontinuierlicher Verlauf des Widerstandsmoments bzw. der (plastischen) Biegung in Längsrichtung, um eine gewünschte Verformung der Lenkwelle im Fall eines Fahrzeugcrashs zu erzielen.

In einer vorteilhaften Weiterbildung der Erfindung unterscheidet sich die Wandstärke des Wellenkörpers in einem Nutbereich einer ersten Nut und in einem Nutbereich einer zweiten Nut voneinander zur Bildung einer ungleichmäßigen Nutenstruktur in Richtung der Längsachse. Insbesondere erstreckt sich jede Nut über einen zugehörigen (axialen) Nutbereich, der jeweils ein (axialer) Teilbereich des Biegeabschnitts des Wellenkörpers ist und somit die Nutenstruktur abschnittsweise bildet. Unter der Wandstärke kann die halbe Differenz zwischen dem Außendurchmesser und dem Innendurchmesser des Wellenkörpers im jeweiligen Nutbereich, insbesondere an der Mittellinie der jeweiligen Nut, verstanden werden. Insbesondere nimmt die Wandstärke zwischen benachbarten Nuten von einer Seite des Biegeabschnitts zur anderen Seite des Biegeabschnitts hin schrittweise (gleichmäßig) zu oder ab. Vorzugsweise ist die Wandstärke an einer im Lenkgetriebe zugewandten Seite kleiner als einer dem Lenkrad zugewandten Seite des Biegeabschnitts. Eine Variation der Wandstärke ist insbesondere durch den Grad der Umformung eines als Wellenkörper dienenden Rohres bei der Herstellung der Lenkwelle einfach erzielbar. Der Nutbereich einer einzelnen Nut kann unterschiedliche Wandstärken aufweisen, bevorzugt ist die Wandstärke an der tiefsten Stelle der Nut am geringsten. Die tiefste Stelle der Nut ist jene Stelle, in der die Nut den geringsten Außendurchmesser aufweist. Bevorzugt ist mit der Wandstärke der Nut die geringste Wandstärke der entsprechenden Nut gemeint.

Bevorzugt ist die Wandstärke jeder Nut im Biegeabschnitt geringer als die Wandstärke des Wellenkörpers außerhalb des Biegeabschnitts.

In einer vorteilhaften Weiterbildung der Erfindung sind mindestens eine Nut, vorzugsweise alle Nuten, in einer äußeren Umfangsfläche des Wellenkörpers nach innen vertieft, insbesondere in einen Innenhohlraum des Wellenkörpers hinein gewölbt, ausgebildet. Insbesondere sind die Außendurchmesser der Nuten kleiner als der Außendurchmesser der Lenkwelle, wobei die Innendurchmesser der Nuten vorzugsweise kleiner sind als der Innendurchmesser der Lenkwelle. Der Außen- bzw. Innendurchmesser der Lenkwelle kann außerhalb des Biegeabschnitts, insbesondere in einem Wellenseitenabschnitt, bestimmt werden. Die Nuten werden insbesondere an der äußeren Umfangsfläche des Wellenkörpers durch (lokales) Umformen in die Wand des Wellenkörpers hinein geformt (eingedrückt bzw. eingepresst). Dadurch vergrößert sich der Außendurchmesser der Lenkwelle im Vergleich zu einem Rohr vor der Umformung während des Herstellungsverfahren nicht.

In einer vorteilhaften Weiterbildung weist der rohrförmige Wellenkörper einen Hüllkreisdurchmesser und eine Wandstärke außerhalb des Biegeabschnitts auf, wobei ein Hüllkreisdurchmesser des Biegeabschnitts kleiner oder gleich der Summe des Hüllkreisdurchmessers des rohrförmigen Wellenkörpers und der zweifachen Wandstärke des rohrförmigen Wellenkörpers ist. Die Summe ist somit der Hüllkreisdurchmesser des rohrförmigen Wellenkörpers außerhalb des Biegeabschnitts zuzüglich der zweifachen (doppelten) Wandstärke des rohrförmigen Wellenkörpers außerhalb des Biegeabschnitts. Der Hüllkreisdurchmesser des rohrförmigen Wellenkörpers entspricht bevorzugt dem Außendurchmesser des rohrförmigen Wellenkörpers.

Besonders bevorzugt ist der Hüllkreisdurchmesser des Biegeabschnitts kleiner oder gleich dem Hüllkreisdurchmesser des rohrförmigen Wellenkörpers. Dadurch lässt sich die erfindungsgemäße ungleichmäßige Nutenstruktur in einem kompakten Bauraum realisieren, wobei die Vorteile der konstruktiven Anpassung des Biegeverhaltens im Crashfall auf engem Raum realisierbar sind. Unter der Wandstärke des rohrförmigen Wellenkörpers kann die halbe Differenz zwischen dem Außendurchmesser und dem Innendurchmesser des Wellenkörpers außerhalb des Biegeabschnitts verstanden werden.

In einer vorteilhaften Weiterbildung der Erfindung weist der Biegeabschnitt mindestens drei, vorzugsweise mindestens vier, jeweils unterschiedlich tiefe und/oder jeweils unterschiedlich voneinander beabstandete Nuten auf. Es können auch mehr als vier Nuten vorgesehen sein, insbesondere bis zu zehn Nuten. Drei oder vier erfindungsgemäß ausgeführte Nuten ermöglichen einerseits ein verbessertes, insbesondere ausreichend kontinuierliches, Biegeverhalten und sind andererseits einfach und kostengünstig herstellbar. Es ist jedoch bereits möglich, mit nur zwei Nuten zur Bildung einer ungleichmäßigen Nutenstruktur ein entsprechendes Biegeverhalten bereitzustellen.

In einer vorteilhaften Weiterbildung der Erfindung beträgt die Tiefe einer Nut zwischen 0,1 und 3 mal, vorzugsweise zwischen 0,2 und 2 mal, weiter vorzugsweise zwischen 0,3 und 1,5 mal, weiter vorzugsweise zwischen 0,4 und 1 mal, einer Wandstärke des Wellenkörpers außerhalb des Biegeabschnitts. Die Wandstärke kann als die halbe Differenz zwischen dem Wellenaußendurchmesser und dem Welleninnendurchmesser verstanden werden. Solche Tiefen der Nuten resultieren in einer ausreichenden Änderung des Widerstandsmoments gegen Biegung im Vergleich zu einem Wellenkörper ohne einen Biegeabschnitt, um das Biegeverhaltens der Lenkwelle geeignet zu beeinflussen.

Außerdem wird die Aufgabe insbesondere gelöst durch ein Verfahren zur

Herstellung einer erfindungsgemäßen Lenkwelle, umfassend die folgenden Schritte:
a) Bereitstellen eines sich entlang einer Längsachse erstreckenden Rohrs;
b) Umformen des Rohrs zur Ausbildung eines rohrförmigen Wellenkörpers einer Lenkwelle mit einem zwischen einem ersten und einem zweiten Wellenende des Wellenkörpers angeordneten Biegeabschnitt, wobei in der Umfangsfläche des Rohrs mindestens zwei in Umfangsrichtung des Wellenkörpers verlaufende Nuten durch mindestens eine Rolle, deren Rollachse zumindest im Wesentlichen parallel zur Längsachse verläuft, derart geformt werden, dass sich
   - die Geometrien einer ersten und einer zweiten Nut voneinander unterscheiden, insbesondere hinsichtlich der Form, der Tiefe und/oder der Breite der Nut,
      und/oder
   - der Abstand zwischen einer ersten und einer zweiten Nut und der Abstand zwischen der zweiten und einer dritten Nut voneinander unterscheiden.

Außerdem wird die Aufgabe insbesondere gelöst durch ein Verfahren zur Herstellung einer Lenkwelle für ein Fahrzeug, umfassend die folgenden Schritte:
- Bereitstellen eines sich entlang einer Längsachse erstreckenden Rohrs mit einem Hüllkreisdurchmesser und einer Wandstärke;
- Umformen des Rohrs zur Ausbildung eines rohrförmigen Wellenkörpers einer Lenkwelle mit einem zwischen einem ersten Wellenende und einem zweiten Wellenende des Wellenkörpers angeordneten Biegeabschnitt, wobei in eine Umfangsfläche des Rohrs mindestens eine in Umfangsrichtung des Wellenkörpers verlaufende Nut durch Abrollen mindestens einer Rolle eingeformt wird,
dadurch gekennzeichnet, dass
der Hüllkreisdurchmesser des Biegeabschnitts kleiner oder gleich der Summe des Hüllkreisdurchmessers des Rohres und der zweifachen Wandstärke ist.

Somit weist das Rohr vor der Umformung einen Hüllkreisdurchmesser und eine Wandstärke auf, wobei dieser Hüllkreisdurchmesser und die Wandstärke, die jener außerhalb des Biegeabschnitts des Rohrs nach der Umformung entspricht, wobei der Hüllkreisdurchmesser des Biegeabschnitts kleiner oder gleich der Summe des Hüllkreisdurchmessers des Rohres und der zweifachen Wandstärke des Rohrs ist. Die Summe ist somit der Hüllkreisdurchmessers des Rohrs entweder vor der Umformung oder außerhalb des Biegeabschnitts zuzüglich der zweifachen Wandstärke des Rohrs vor der Umformung oder außerhalb des Biegeabschnitts.

Besonders bevorzugt ist der Hüllkreisdurchmesser des Biegeabschnitts kleiner oder gleich dem Hüllkreisdurchmesser des Rohrs. Dadurch lässt sich die erfindungsgemäße ungleichmäßige Nutenstruktur in einem kompakten Bauraum realisieren, wobei die Vorteile der konstruktiven Anpassung des Biegeverhaltens im Crashfall auf engem Raum realisierbar sind.

Bevorzugt erfolgt das Einformen der mindestens einen Nut durch das Abrollen einer Rolle auf der Umfangsfläche des Rohrs so, dass das Rohr partiell, also lokal plastisch deformiert wird. Nach der Umformung, das heisst wenn alle Nuten zur Bildung des Biegeabschnitts eingebracht sind, existieren Bereiche im Biegeabschnitt und/oder außerhalb des Biegeabschnitts, die unverformt sind.

Der Biegeabschnitt wird insbesondere durch Kaltumformen des Rohrs ausgebildet, wobei unter Formen einer Nut insbesondere das Eindrücken bzw. Einpressen einer Rolle in das Rohr, insbesondere in dessen Wandmaterial, verstanden werden kann. Insbesondere übt die Rolle beim Umformen eine Umformkraft (Presskraft) auf die Umfangsfläche des Rohrs aus, um das Wandmaterial zur Ausbildung einer Nut lokal plastisch zu verformen. Insbesondere wälzen sich das Rohr und die mindestens eine Rolle gegeneinander ab, wobei das Rohr und die Rolle vorzugsweise entgegengesetzt rotieren. Das Rohr oder die Rolle können aber auch stillstehen, während nur die Rolle bzw. das Rohr rotiert.

Bevorzugt weist der Biegeabschnitt eine Mehrzahl von in Umfangsrichtung des Wellenkörpers verlaufenden Nuten zur Bildung einer Nutenstruktur auf, wobei die Nutenstruktur in Richtung der Längsachse ungleichmäßig ausgebildet ist.

Das erfindungsgemäße Verfahren kann einige oder alle verfahrenstechnischen Merkmale umsetzen, die im Zusammenhang mit der erfindungsgemäßen Lenkwelle beschrieben wurden und hat ähnliche Vorteile. Insbesondere kann durch das Verfahren ein Biegeabschnitt auf einfache Weise so ausgebildet werden, bevorzugt auch so, dass sich ein gewünschtes Biegeverhalten der Lenkwelle einstellt.

In einer vorteilhaften Weiterbildung der Erfindung werden die Nuten durch eine Rolle geformt, wobei mindestens eine erste Nut in einer ersten Längsposition der Rolle und eine zweite Nut in einer axial davon beabstandeten zweiten Längsposition der Rolle geformt wird, wobei die Rolle in der ersten und zweiten Längsposition insbesondere unterschiedlich weit auf die Umfangsfläche des Rohrs hin zugestellt wird und/oder die Längspositionen der Rolle unterschiedlich weit voneinander beabstandet sind. Insbesondere ist eine einzige Rolle zum Formen mehrerer Nuten vorgesehen. Die Rolle kann von der ersten in die zweite Längsposition relativ zum Rohr bewegt, vorzugsweise verschoben oder verfahren, werden, oder umgekehrt. Die Form einer Nut entspricht insbesondere der Oberflächenform einer Rollfläche der Rolle. Eine dem Verfahren entsprechende Fertigungsvorrichtung mit einer (axial verschieblichen) Rolle ist einfach im Aufbau und in der Steuerung. Nuten in verschiedenen Abständen sind einfach formbar. Zum Formen von Nuten verschiedener Tiefen ist die Rolle in radialer Richtung der Lenkwelle verschieblich. Vorzugsweise wird die Rolle zum Zustellen motorisch, pneumatisch oder hydraulisch verfahren. Die Rolle kann während des Umformvorgangs weiter zugestellt werden, wobei das Umformen mehrere Umdrehungen der Rolle umfassen kann.

In einer alternativen vorteilhaften Weiterbildung der Erfindung werden die Nuten durch mindestens zwei axial voneinander beabstandete, insbesondere entlang einer gemeinsamen Rollachse angeordnete, Rollen mit unterschiedlicher Rollengeometrie, insbesondere unterschiedlichem Rollendurchmesser, und/oder unterschiedlichen Abständen zwischen einer ersten und einer zweiten Rolle und zwischen der zweiten und deiner dritten Rolle geformt. Die Rollen sind insbesondere auf einer gemeinsamen Rollenachse in vorgegebenen Abständen zueinander montiert. Vorzugsweise ist jeder zu formenden Nut eine Rolle zugeordnet. Die Rollen können gleiche oder verschiedene Rollflächenformen oder Rollenbreiten aufweisen.

In einer vorteilhaften Weiterbildung der Erfindung ist die Länge des Rohrs vor und nach dem Umformen im Wesentlichen gleich. Unter "im Wesentlichen gleich" wird eine Abweichung von ±5% der ursprünglichen Länge des Rohrs verstanden. Besonders bevorzugt ist die Länge des Rohrs vor und nach dem Umformen gleich. Insbesondere kann das Rohr während des Umformens beidseitig axial eingespannt werden, um eine Längung oder Stauchung des Rohrs zu verhindern. Auf diese Weise kann ein vorgefertigter Rohrrohling auch nach dem Umformen mit den vorgesehenen Längenabmessungen als fertige Lenkwelle in eine Lenkanordnung eines Fahrzeugs eingebaut werden. Es ist somit keine mechanische Bearbeitung zur Anpassung der Länge nach der Umformoperation erforderlich. Bevorzugt ist die nach dem erfindungsgemäßen Verfahren hergestellte Lenkwelle eine erfindungsgemäße Lenkwelle gemäß der erfindungsgemäßen Lehre.

Ausführungsbeispiele der Erfindung werden nachfolgend anhand der Zeichnungen näher erläutert. Hierbei zeigen:
- Figur 1A:: eine schematische Darstellung einer ersten Ausführungsform einer erfindungsgemäßen Lenkwelle mit Nuten unterschiedlicher Geometrie zur Bereitstellung einer ungleichmäßigen Nutenstruktur in einer Halbschnittansicht;
- Figur 1B:: schematische Darstellung der Ausführungsform nach Figur 1A mit eingezeichneten Außendurchmessern der jeweiligen Nutbereiche;
- Figur 2:: eine schematische Darstellung einer zweiten Ausführungsform einer erfindungsgemäßen Lenkwelle mit unterschiedlich voneinander beabstandeten Nuten zur Bereitstellung einer ungleichmäßigen Nutenstruktur in einer Halbschnittansicht;
- Figur 3:: eine schematische Darstellung einer dritten Ausführungsform einer erfindungsgemäßen Lenkwelle mit drei unterschiedlich voneinander beabstandeten Nuten zur Bereitstellung einer ungleichmäßigen Nutenstruktur in einer Halbschnittansicht;
- Figur 4:: eine schematische Darstellung einer ersten Ausführungsform des erfindungsgemäßen Herstellungsverfahrens für eine Lenkwelle mit einer zustellbaren Rolle in einer Halbschnittansicht;
- Figur 5:: eine schematische Darstellung einer zweiten Ausführungsform des erfindungsgemäßen Herstellungsverfahrens für eine Lenkwelle mit mehreren Rollen in einer Halbschnittansicht;
- Figur 6:: eine schematische Darstellung einer Lenkanordnung mit einer erfindungsgemäßen Lenkwelle in einer perspektivischen Ansicht;
- Figur 7:: eine schematische Darstellung einer vierten Ausführungsform einer erfindungsgemäßen Lenkwelle in einer Halbschnittansicht;
- Figur 8:: eine schematische Darstellung einer erfindungsgemäßen Lenkwelle im unverbogenen Zustand im Normalbetrieb;
- Figur 9:: eine schematische Darstellung der Lenkwelle nach Figur 8 im verbogenen Zustand nach einem Crashfall.

In der nachfolgenden Beschreibung der Erfindung werden für gleiche und gleich wirkende Elemente dieselben Bezugszeichen verwendet.

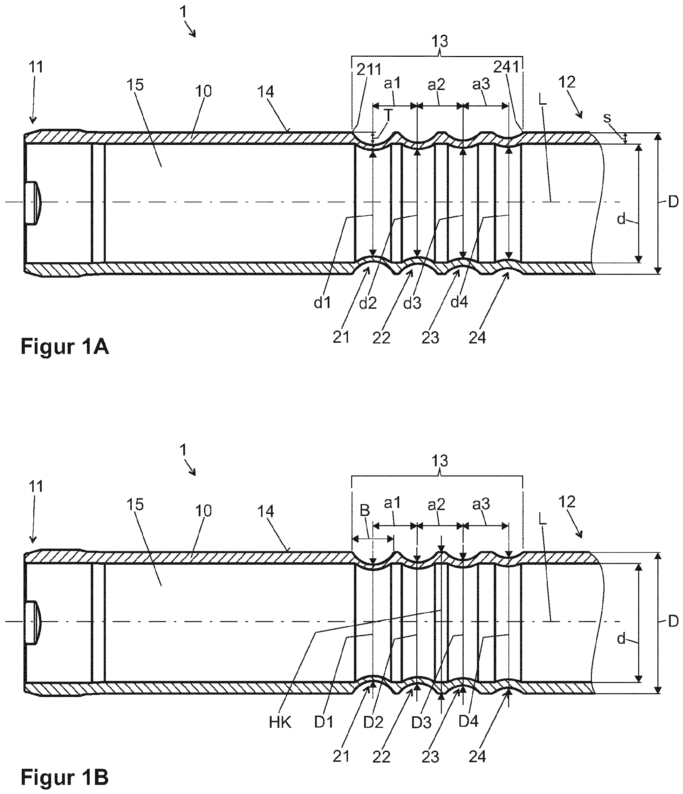

Die Figuren 1A und 1B zeigen eine Ausführungsform einer erfindungsgemäßen Lenkwelle 1 mit einem Wellenkörper 10, der ein erstes Wellenende 11 und ein zweites Wellenende 12 aufweist, die zur gelenkigen Ankopplung an ein Lenkgetriebe bzw. ein Lenkrad eines Fahrzeugs vorgesehen sind. Der rohrförmige Wellenkörper 10 ist als eine Hohlwelle mit einer Längsachse L, einem Innendurchmesser d, einem Außendurchmesser D, der auch als Hüllkreisdurchmesser des rohrförmigen Wellenkörpers 10 außerhalb des Biegeabschnitts 13 bezeichnet werden kann, und einem Innenhohlraum 15 ausgeführt. Der Hüllkreisdurchmesser ist der Durchmesser des Hüllkreises von dem der Querschnitt, der orthogonal zur Längsachse ausgerichtet ist, des Wellenkörpers 10 umschrieben ist. Weiterhin weist der Wellenkörper 10 eine Wandstärke s auf, die der halben Differenz aus Außendurchmesser und Innendurchmesser entspricht. In einem Biegeabschnitt 13 des Wellenkörpers 10 sind vier Nuten 21, 22, 23, 24 in gleichen Abständen a1, a2, a3 zueinander in die äußere Umfangsfläche 14 des Wellenkörpers 10 eingeformt. Der Biegeabschnitt 13 umfasst vier Nuten 21, 22, 23, 24, die jeweils eine andere Geometrie aufweisen so dass eine erfindungsgemäße ungleichmäßige Nutenstruktur in Richtung der Längsachse L ausgebildet ist. Der Biegeabschnitt 13 ist durch die äußeren Ränder 211, 241 der äußeren Nuten 21, 24 begrenzt. Der Hüllkreisdurchmesser HK des Biegeabschnitts 13, ist der Durchmesser des Hüllkreises, der den maximalen Querschnitt des Biegeabschnitts 13, der orthogonal zur Längsachse ausgerichtet ist, umschreibt. Mit anderen Worten ist der Hüllkreisdurchmesser HK des Biegeabschnitts 13 der maximale Außendurchmesser im Biegeabschnitt 13. Die Nuten 21, 22, 23, 24 sind als ringförmige Ringnuten in Umfangsrichtung um den Wellenkörper 10 umlaufend ausgebildet und bilden im Querschnitt kreissegmentförmige Vertiefungen gegenüber der Umfangsfläche 14 aus. Die Tiefe T der axial benachbarten Nuten nimmt von der ersten Nut 21 auf einer dem Lenkgetriebe zugewandten Seite (in den Figuren links) bis zur einer dem Lenkrad zugewandten Seite (in den Figuren rechts) bis zur vierten Nut 24 ab. Dementsprechend nehmen die in Figur 1B eingezeichneten Außendurchmesser D1, D2, D3, D4 der zugehörigen Nuten 21, 22, 23, 24 von links nach rechts zu (D1<D2<D3<D4). Die Innendurchmesser d1, d2, d3, d4 der zugehörigen Nuten 21, 22, 23, 24 nehmen von links nach rechts ebenfalls zu (d1<d2<d3<d4). Die Wandstärken, z.B. definiert durch die halbe Differenz zwischen dem jeweiligen Außendurchmesser D1, D2, D3, D4 und dem Innendurchmesser d1, d2. d3, d4, d.h. z.B. (D1-d1)/2, in den jeweiligen Nutbereichen nehmen von links nach rechts zu. Die Durchmesser sind jeweils entlang einer Mittellinie der Nut, d.h. in der Mitte des axialen Nutbereichs bzw. an der tiefsten Stelle der Nut, bestimmt. Der Wellenkörper 10 wölbt sich im Biegeabschnitt 13 in den Nutbereichen in den Innenhohlraum 15 hinein nach innen aus. Die Außendurchmesser D1, D2, D3, D4 in den Nutbereichen sind kleiner als der Außendurchmesser D des Wellenkörpers 10 und die Innendurchmesser d1, d2, d3, d4 sind kleiner ist der Innendurchmesser d des Wellenkörpers 10. Der rohrförmige Wellenkörper 10 weist somit einen Hüllkreisdurchmesser D und eine Wandstärke s außerhalb des Biegeabschnitts 13 auf, wobei der Hüllkreisdurchmesser HK des Biegeabschnitts 13 kleiner der Summe des Hüllkreisdurchmessers D des rohrförmigen Wellenkörpers 10 und der zweifachen Wandstärke (2s) des rohrförmige Wellenkörpers 10 ist. In den Wellenseitenabschnitten seitlich also außerhalb des Biegeabschnitts 13 weist der Wellenkörper 10 im Wesentlichen einen konstanten Querschnitt, bzw. einen konstanten Außendurchmesser D und Innendurchmesser d, auf. Durchmesser und Wandstärken des Wellenkörpers 10 können in Längsrichtung L aber auch außerhalb des Bereichs 13 variieren, beispielsweise zur Bereitstellung eines Koppelabschnitts zur Kopplung des Wellenkörpers 10 mit einer Gabel eines Universalgelenks.

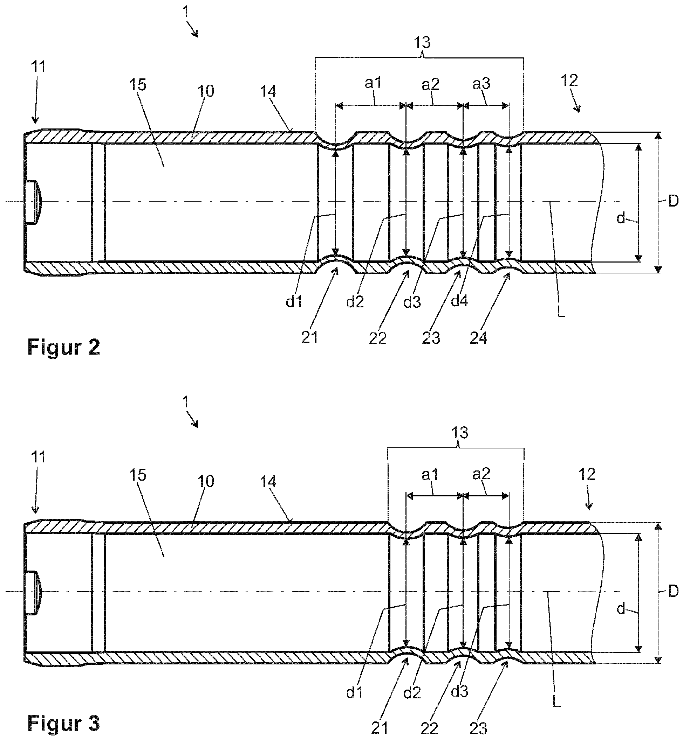

Figur 2 zeigt eine zweite Ausführungsform einer erfindungsgemäßen Lenkwelle 1, die sich von der in den Figuren 1A und 1B gezeigten Lenkwelle 1 dadurch unterscheidet, dass die Abstände a1, a2, a3 zwischen jeweils zwei benachbarten Nuten 21, 22, 23 und 24 verschieden sind, wodurch eine erfindungsgemäße ungleichmäßige Nutenstruktur in Richtung der Längsachse L bereitgestellt ist. Die Abstände a1, a2, a3 verkürzen sich von links nach rechts. Der erste Abstand a1 zwischen der ersten Nut 21 und der zweiten Nut 22 ist größer als der zweite Abstand a2 zwischen der zweiten Nut 22 und der dritten Nut 23, der wiederum größer ist als der dritte Abstand a3 zwischen der dritten Nut 23 und der vierten Nut 24.

Figur 3 zeigt eine dritte Ausführungsform einer erfindungsgemäßen Lenkwelle, die der in Figur 2 entspricht, wobei der Biegeabschnitt 13 nur drei Nuten 21, 22, 23 mit voneinander unterschiedlichen Abständen a1 und a2 umfasst zur Bildung einer ungleichmäßigen Nutenstruktur.

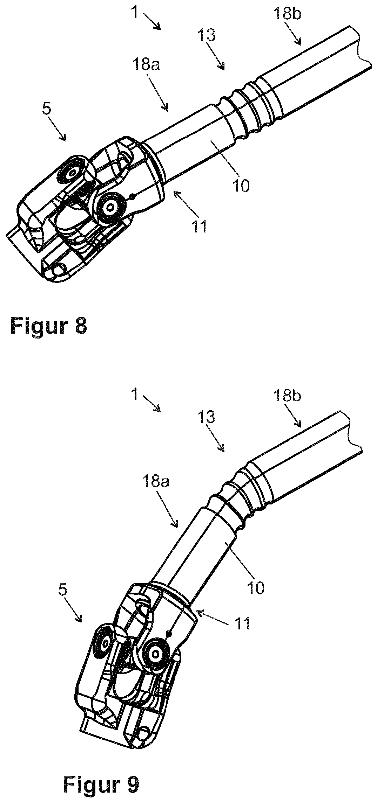

Die in den Figuren 1A bis 3 dargestellten Lenkwellen 1 weisen Biegeabschnitte 13 mit einer ungleichmäßige Nutenstruktur auf, die ein bestimmtes Biegeverhalten der Lenkwelle 1 bewirken, wenn diese im eingebauten Zustand bei einem Fahrzeugcrash durch die einwirkenden Kräfte verformt wird. Über die ungleichmäßige Nutenstruktur wie, die Anzahl, die Geometrie (Tiefe T, Breite B) der Nuten und/oder die Abstände der Nuten zueinander, ist das Widerstandsmoment des Wellenkörpers 10 gegen Verformung lokal einstellbar, woraus das Biegeverhalten der gesamten Lenkwelle 1 entsprechend einer gewünschten Form im Falle eines Fahrzeugcrash beeinflussbar ist (siehe Fig. 8 und 9).

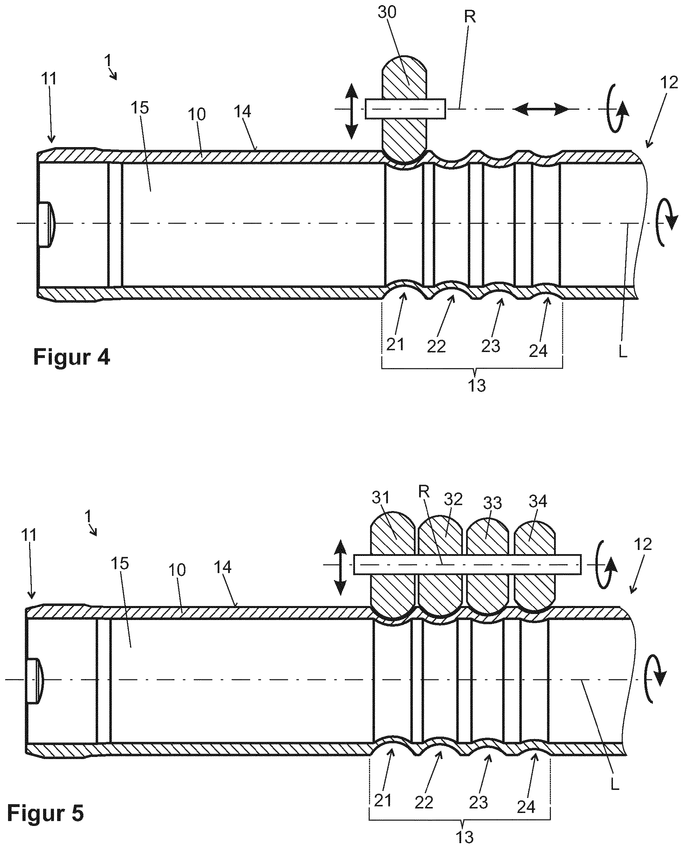

Die Figuren 4 und 5 illustrieren zwei alternative Ausführungsformen eines erfindungsgemäßen Herstellungsverfahrens für eine Lenkwelle 1, umfassend die folgenden Schritte:
- Bereitstellen eines sich entlang einer Längsachse L erstreckenden Rohrs mit einem Hüllkreisdurchmesser D und einer Wandstärke s;
- Umformen des Rohrs zur Ausbildung eines rohrförmigen Wellenkörpers 10 einer Lenkwelle 1 mit einem zwischen einem ersten Wellenende 11 und einem zweiten Wellenende 12 des Wellenkörpers 10 angeordneten Biegeabschnitt 13,
wobei in eine Umfangsfläche 14 des Rohrs mindestens eine in Umfangsrichtung des Wellenkörpers 10 verlaufende Nut 21, 22, 23, 24 durch Abrollen mindestens einer Rolle 30, 31, 32, 33, 34 eingeformt wird. Erfindungsgemäß ist der Hüllkreisdurchmesser HK des Biegeabschnitts 13 kleiner oder gleich der Summe des Hüllkreisdurchmessers D des Rohres und der zweifachen Wandstärke ist.

Der kann wie in den Ausführungsvarianten der Figuren 4 und 5 einen Biegeabschnitt 13 mit vier Nuten 21, 22, 23, 24 verschiedener Geometrie, insbesondere verschiedener Tiefe T und Breite B, aufweist, um ein bestimmtes Biegeverhalten zu erzielen. Bei den dargestellten Verfahren wird mindestens eine um eine Rollachse R drehbar gelagerte Rolle 30 (siehe Fig. 4) bzw. Rollen 31, 32, 33, 34 (siehe Fig.5) zur Umfangsfläche 14 eines den Wellenkörper 10 bildenden Rohrs hin in radialer Richtung zugestellt (siehe radialer Doppelpfeil), um eine Umformkraft auf das Rohr auszuüben. Die Rollachse R und die Längsachse L sind in dieser Ausführungsvariante im Wesentlichen parallel zueinander ausgerichtet. Die Rollen 30, 31, 32, 33, 34 und der Wellenkörper 10 rotieren gegeneinander (siehe Pfeile für Drehrichtungen), wobei sie vorzugsweise aufeinander abrollen bzw. sich aufeinander abwälzen.

Bei dem in Figur 4 illustrierten Herstellungsverfahren ist eine einzige Rolle 30 vorgesehen, die in der Längsrichtung L axial verschieblich ist (siehe axialer Doppelpfeil), um an verschiedenen Längspositionen jeweils eine der Nuten 21, 22, 23, 24 in dem Rohr zu formen. Dementsprechend werden die Nuten 21, 22, 23, 24 nacheinander geformt. Es könnte auch das Rohr relativ zur Rolle 30 (in Figur 4 nach links) verschoben bzw. verfahren werden. Somit weist der Biegeabschnitt 13 eine Mehrzahl von in Umfangsrichtung des Wellenkörpers 10 verlaufenden Nuten 21, 22, 23, 24 zur Bildung einer Nutenstruktur auf, wobei die Nutenstruktur in Richtung der Längsachse L ungleichmäßig ausgebildet ist.

Bei dem in Figur 5 illustrierten Herstellungsverfahren sind vier um eine gemeinsame Rollachse R drehbar gelagerte Rollen 31, 32, 33, 34 vorgesehen, wobei alle Nuten 21, 22, 23, 24 gleichzeitig geformt werden. Die Abstände der Rollen 31, 32, 33, 34 zueinander können variierbar sein, um verschiedene Abstände a1, a2, a3 der Nuten 21, 22, 23, 24 zueinander zu erzeugen. Somit weist der Biegeabschnitt 13 eine Mehrzahl von in Umfangsrichtung des Wellenkörpers 10 verlaufenden Nuten 21, 22, 23, 24 zur Bildung einer Nutenstruktur auf, wobei die Nutenstruktur in Richtung der Längsachse L ungleichmäßig ausgebildet ist.

Die erfindungsgemäßen Verfahren haben den Vorteil, dass eine Lenkwelle 1 mit einem Biegeabschnitt 13 einfach herstellbar ist und nur einen geringen Bauraumbedarf aufweist.

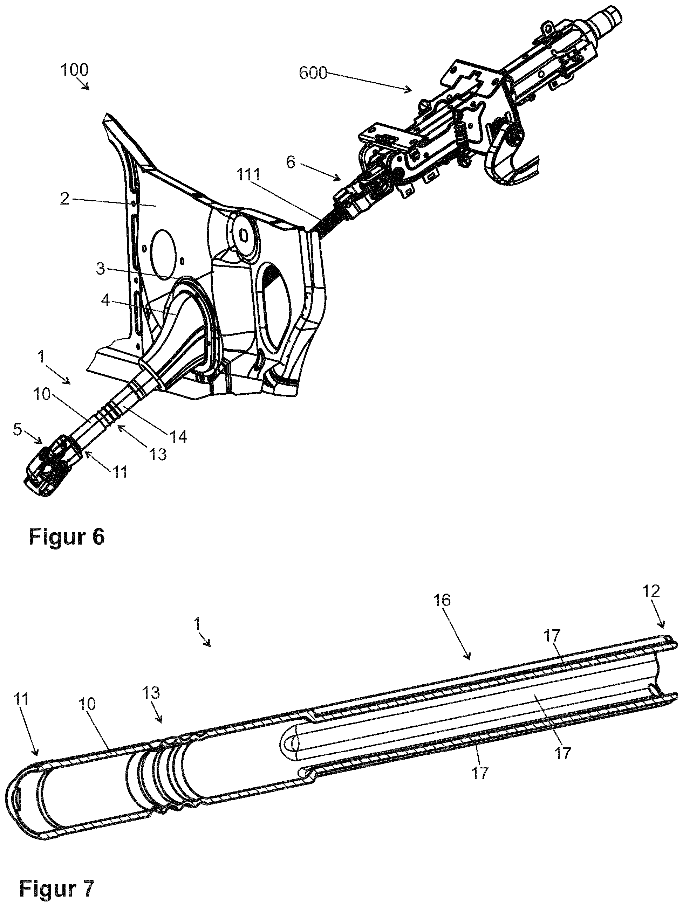

In Figur 6 ist eine an sich bekannte Lenkanordnung 100 dargestellt, die eine erfindungsgemäße Lenkwelle 1 mit einem Biegeabschnitt 13 umfasst, wobei der der Biegeabschnitt 13 eine Mehrzahl von in Umfangsrichtung des Wellenkörpers 10 verlaufenden Nuten 21, 22, 23, 24 zur Bildung einer Nutenstruktur aufweist, wobei die Nutenstruktur in Richtung der Längsachse L ungleichmäßig ausgebildet ist. Die Lenkwelle 1 ist an ein einem Lenkgetriebe zugewandtes Gelenk 5 und an ein einem Lenkrad zugewandtes Gelenk 6 gekoppelt. Die Lenkwelle 1 ragt durch eine Spritzwanddurchführung 4 in einer Spritzwand 2 hindurch. Die Spritzwanddurchführung 4 ist mit einer Dichtstulpe 3 gegen Spritzwasser abgedichtet. Zwischen dem Gelenk 6 und dem nicht dargestellten Lenkrad ist die Lenkwelle in einer Lenksäule 600 drehbar gelagert, wobei die Lenksäule als manuell-verstellbare Lenksäule 600 ausgebildet ist. Alternativ können auch andere Typen von Lenksäulen zum Einsatz kommen, wie starre Lenksäulen oder elektrisch-verstellbare Lenksäulen.

In Figur 7 ist eine Ausführungsform einer erfindungsgemäßen Lenkwelle 1 mit einem Schiebewellenabschnitt 16 gezeigt, der in Längsrichtung ausgerichtete Formschlusselemente 17 aufweist. In den Schiebewellenabschnitt 16 ist eine Innenwelle 111 einschiebbar, wobei diese komplementäre Formschlusselemente aufweist, die mit den Formschlusselementen 17 in Eingriff bringbar sind zur Übertragung eines Drehmoments. Die Innenwelle 111 und der Wellenkörper 10 können zueinander teleskopierbar ausgebildet sein.

In der Figur 8 ist eine Ausführungsform einer erfindungsgemäßen Lenkwelle 1 im unverformten (unverbogenen) Zustand im Normalbetrieb mit einer ungleichmäßigen Nutenstruktur vor dem Eintreten eines Crashfalls dargestellt. In der Figur 9 ist die Lenkwelle 1 aus der Figur 8 im verformten (verbogenen) Zustand nach dem Eintreten eines Crashfalls dargestellt. Die Lenkwelle 1 verbiegt sich insbesondere im Biegeabschnitt 13, während die beidseitig dazu angeordneten Wellenseitenabschnitte 18a bzw. 18b nicht oder nur geringfügig verbogen sind. Durch die erfindungsgemäße ungleichmäßige Nutenstruktur (siehe Fig. 1 bis 5) ist der Biegeabschnitt 13 insgesamt weniger biegesteif als die beiden Wellenseitenabschnitte 18a, 18b, wobei ein bestimmtes Biegeverhalten (Biegekennline) bzw. eine resultierende Bierverformung und/oder Stauchung der Lenkwelle 1 konstruktiv festgelegt ist. Das Biegeverhalten kann durch die ungleichmäßige Nutenstruktur beispielsweise durch eine geeignete Wahl der Geometrie und/oder der Abstände a1, a2, a3 der Nuten 21, 22, 23, 24 so vorbestimmt werden, dass im Falle eines Fahrzeugscrashs die Lenkwelle 1 nicht in die Fahrgastzelle des Fahrzeugs 1 eindringt. Dadurch reduziert sich die Verletzungsgefahr für den Fahrer.

## Patentansprüche

1. Lenkwelle (1) für ein Fahrzeug, umfassend
einen rohrförmigen Wellenkörper (10), der sich entlang einer Längsachse (L) erstreckt und ein erstes Wellenende (11) und ein zweites Wellenende (12) aufweist, wobei zwischen dem ersten Wellenende (11) und dem zweiten Wellenende (12) ein Biegeabschnitt (13) angeordnet ist,
wobei der Biegeabschnitt (13) eine Mehrzahl von in Umfangsrichtung des Wellenkörpers (10) verlaufenden Nuten (21, 22, 23, 24) zur Bildung einer Nutenstruktur aufweist, und wobei die Nutenstruktur in Richtung der Längsachse (L) ungleichmäßig ausgebildet ist,
**dadurch gekennzeichnet, dass** eine Anzahl der Nuten (21, 22, 23, 24) in einer äußeren Umfangsfläche (14) des Wellenkörpers (10) nach innen vertieft ausgebildet ist, wobei die Außendurchmesser (D1, D2, D3, D4) dieser Nuten (21, 22, 23, 24) kleiner als der Außendurchmesser (D) der Lenkwelle (1) sind, und wobei die Innendurchmesser (d1, d2, d3, d4) dieser Nuten (21, 22, 23, 24) kleiner als der Innendurchmesser (d) der Lenkwelle (1) sind.

2. Lenkwelle nach Anspruch 1, **dadurch gekennzeichnet, dass** die Geometrie einer ersten Nut (21) sich von der Geometrie einer zweiten Nut (22) unterscheidet.

3. Lenkwelle nach einem der vorhergehenden Ansprüche, **dadurch gekennzeichnet, dass** eine erste Nut (21) einen ersten Abstand (a1) zu einer zweiten Nut (22) aufweist, wobei die zweite Nut (22) einen zweiten Abstand (a2) zu einer dritten Nut (23) aufweist, wobei der erste Abstand (a1) sich von dem zweiten Abstand (a2) unterscheidet.

4. Lenkwelle nach einem der vorhergehenden Ansprüche,
**dadurch gekennzeichnet, dass** sich eine Tiefe der Nuten (21, 22, 23, 24), eine Breite der Nuten (21, 22, 23, 24) und/oder der Abstand zweier Nuten (21, 22, 23, 24) von einer dem ersten Wellenende (11) zugewandten Seite des Biegeabschnitts (13) zu einer dem zweiten Wellenende (12) zugewandten Seite des Biegeabschnitts (13) hin vergrößert oder verkleinert.

5. Lenkwelle nach einem der vorhergehenden Ansprüche,
**dadurch gekennzeichnet, dass** sich die Wandstärke des Wellenkörpers (10) in einem Nutbereich einer ersten Nut (21) und in einem Nutbereich einer zweiten Nut (22) voneinander unterscheidet.

6. Lenkwelle nach einem der vorherigen Ansprüche,
**dadurch gekennzeichnet, dass** der Biegeabschnitt (13) mindestens drei, jeweils unterschiedlich tiefe und/oder jeweils unterschiedlich voneinander beabstandete Nuten (21, 22, 23, 24) aufweist.

7. Lenkwelle nach einem der vorherigen Ansprüche,
**dadurch gekennzeichnet, dass** die Tiefe einer Nut (21, 22, 23, 24) zwischen 0,1 und 3 mal einer Wandstärke des Wellenkörpers (10) außerhalb des Biegeabschnitts (13) beträgt.

8. Lenkwelle nach einem der vorhergehenden Ansprüche, **dadurch gekennzeichnet, dass** der rohrförmige Wellenkörper (10) einen Hüllkreisdurchmesser (D) und eine Wandstärke (s) außerhalb des Biegeabschnitts (13) aufweist, wobei ein Hüllkreisdurchmesser (HK) des Biegeabschnitts (13) kleiner oder gleich der Summe des Hüllkreisdurchmessers (D) des rohrförmigen Wellenkörpers (10) und der zweifachen Wandstärke (s) des rohrförmigen Wellenkörpers (10) ist.

9. Verfahren zur Herstellung einer Lenkwelle gemäß einem der Ansprüche 1 bis 8 für ein Fahrzeug, umfassend die folgenden Schritte:
- Bereitstellen eines sich entlang einer Längsachse (L) erstreckenden Rohrs mit einem Hüllkreisdurchmesser (D) und einer Wandstärke (s);
- Umformen des Rohrs zur Ausbildung eines rohrförmigen Wellenkörpers (10) einer Lenkwelle (1) mit einem zwischen einem ersten Wellenende (11) und einem zweiten Wellenende (12) des Wellenkörpers (10) angeordneten Biegeabschnitt (13),
wobei in eine Umfangsfläche (14) des Rohrs mehrere in Umfangsrichtung des Wellenkörpers (10) verlaufende Nuten (21, 22, 23, 24) durch Abrollen mindestens einer Rolle (30, 31, 32, 33, 34) eingeformt werden, wobei der Hüllkreisdurchmesser (HK) des Biegeabschnitts (13) kleiner oder gleich der Summe des Hüllkreisdurchmessers (D) des Rohres und der zweifachen Wandstärke (s) ist.

10. Verfahren nach Anspruch 9, **dadurch gekennzeichnet, dass** der Biegeabschnitt (13) eine Mehrzahl von in Umfangsrichtung des Wellenkörpers (10) verlaufenden Nuten (21, 22, 23, 24) zur Bildung einer Nutenstruktur aufweist, wobei die Nutenstruktur in Richtung der Längsachse (L) ungleichmäßig ausgebildet ist.

11. Verfahren nach Anspruch 9 oder 10,
**dadurch gekennzeichnet, dass** die Nuten (21, 22, 23, 24) durch eine Rolle (30) geformt werden, wobei mindestens eine erste Nut (21) in einer ersten Längsposition der Rolle (30) und eine zweite Nut (22) in einer axial davon beabstandeten zweiten Längsposition der Rolle (30) geformt wird, wobei
- die Rolle (30) in der ersten und zweiten Längsposition unterschiedlich weit auf die Umfangsfläche (14) des Rohrs hin zugestellt wird
und/oder
- die Längspositionen der Rolle (30) unterschiedlich weit voneinander beabstandet sind.

12. Verfahren nach Anspruch 11,
**dadurch gekennzeichnet, dass** die Nuten (21, 22, 23, 24) durch mindestens zwei axial voneinander beabstandete, insbesondere entlang einer gemeinsamen Rollachse (R) angeordnete, Rollen (31, 32, 33, 34) mit
- unterschiedlicher Rollengeometrie,
und/oder
- unterschiedlichen Abständen (a1, a2) zwischen einer ersten Rolle (31) und einer zweiten Rolle (32) und zwischen der zweiten Rolle (32) und deiner dritten Rolle (33)
geformt werden.

13. Verfahren nach einem der Ansprüche 9 bis 12,
**dadurch gekennzeichnet, dass** die Länge des Rohrs vor und nach dem Umformen gleich ist.

## Claims

1. A steering shaft (1) for a vehicle, comprising
a tubular shaft body (10) which extends along a longitudinal axis (L) and has a first shaft end (11) and a second shaft end (12), a bending section (13) being arranged between the first shaft end (11) and the second shaft end (12),
the bending section (13) having a plurality of grooves (21, 22, 23, 24) which run in the circumferential direction of the shaft body (10) for the formation of a groove structure, and wherein the groove structure is of non-uniform configuration in the direction of the longitudinal axis (L),
**characterized in that** a number of grooves (21, 22, 23, 24) are configured so as to be recessed inward in an outer circumferential face (14) of the shaft body (10), wherein the external diameters (D1, D2, D3, D4) of said grooves (21, 22, 23, 24) are smaller than the external diameter (D) of the steering shaft (1), and the internal diameters (d1, d2, d3, d4) of said grooves (21, 22, 23, 24) being smaller than the internal diameter (d) of the steering shaft (1).

2. The steering shaft as claimed in claim 1, **characterized in that** the geometry of a first groove (21) differs from the geometry of a second groove (22).

3. The steering shaft as claimed in either of the preceding claims, **characterized in that** a first groove (21) is at a first spacing (a1) from a second groove (22), the second groove (22) being at a second spacing (a2) from a third groove (23), the first spacing (a1) differing from the second spacing (a2).

4. The steering shaft as claimed in one of the preceding claims, **characterized in that** a depth of the grooves (21, 22, 23, 24), a width of the grooves (21, 22, 23, 24) and/or the spacing of two grooves (21, 22, 23, 24) increases or decreases from a side of the bending section (13), which side faces the first shaft end (11), toward a side of the bending section (13), which side faces the second shaft end (12).

5. The steering shaft as claimed in one of the preceding claims, **characterized in that** the wall thickness of the shaft body (10) in a groove region of a first groove (21) and that in a groove region of a second groove (22) differ from one another.

6. The steering shaft as claimed in one of the preceding claims, **characterized in that** the bending section (13) has at least three grooves (21, 22, 23, 24) which are in each case of different depth and/or are at a different spacing from one another in each case.

7. The steering shaft as claimed in one of the preceding claims, **characterized in that** the depth of a groove (21, 22, 23, 24) is between 0.1 and 3 times a wall thickness of the shaft body (10) outside the bending section (13).

8. The steering shaft as claimed in one of the preceding claims, **characterized in that** the tubular shaft body (10) has an enveloping circle diameter (D) and a wall thickness (s) outside the bending section (13), an enveloping circle diameter (HK) of the bending section (13) being smaller than or equal to the sum of the enveloping circle diameter (D) of the tubular shaft body (10) and twice the wall thickness (s) of the tubular shaft body (10).

9. A method for producing a steering shaft according to one of claims 1 to 8 for a vehicle, comprising the following steps:
- providing of a tube which extends along a longitudinal axis (L) with an enveloping circle diameter (D) and a wall thickness (s);
- forming of the tube in order to configure a tubular shaft body (10) of a steering shaft (1) with a bending section (13) which is arranged between a first shaft end (11) and a second shaft end (12) of the shaft body (10),
a plurality of grooves (21, 22, 23, 24) which run in the circumferential direction of the shaft body (10) being formed into a circumferential face (14) of the tube by way of rolling of at least one roller (30, 31, 32, 33, 34), wherein the enveloping circle diameter (HK) of the bending section (13) is smaller than or equal to the sum of the enveloping circle diameter (D) of the tube and twice the wall thickness (s).

10. The method as claimed in claim 9, **characterized in that** the bending section (13) has a plurality of grooves (21, 22, 23, 24) which run in the circumferential direction of the shaft body (10) for the formation of a groove structure, the groove structure being of non-uniform configuration in the direction of the longitudinal axis (L).

11. The method as claimed in claim 9 or 10, **characterized in that** the grooves (21, 22, 23, 24) are formed by way of a roller (30), at least one first groove (21) being formed in a first longitudinal position of the roller (30), and one second groove (22) being formed in a second longitudinal position of the roller (30), which second longitudinal position is spaced apart axially from said first longitudinal position,
- the roller (30) being advanced to a different extent onto the circumferential face (14) of the tube in the first and second longitudinal position,
and/or
- the longitudinal positions of the roller (30) being spaced apart from one another to a different extent.

12. The method as claimed in claim 11, **characterized in that** the grooves (21, 22, 23, 24) are formed by way of at least two rollers (31, 32, 33, 34) which are spaced apart axially from one another, are arranged, in particular, along a common rolling axis (R), and have
- a different roller geometry,
and/or
- different spacings (a1, a2) between a first roller (31) and a second roller (32) and between the second roller (32) and a third roller (33).

13. The method as claimed in one of claims 9 to 12, **characterized in that** the length of the tube is identical before and after the forming.

## Revendications

1. Arbre de direction (1) pour un véhicule, comprenant
un corps d'arbre tubulaire (10) qui s'étend le long d'un axe longitudinal (L) et possède une première extrémité d'arbre (11) et une seconde extrémité d'arbre (12), une section de flexion (13) étant disposée entre la première extrémité d'arbre (11) et la seconde extrémité d'arbre (12),
la section de flexion (13) comporte plusieurs rainures (21, 22, 23, 24) qui s'étendent dans la direction circonférentielle du corps de l'arbre (10) pour former une structure de rainure, et dans laquelle la structure de rainure est de configuration non uniforme dans la direction de l'axe longitudinal (L),
**caractérisé en ce qu'**un certain nombre de rainures (21, 22, 23, 24) sont configurées de manière à être encastrées vers l'intérieur dans une face circonférentielle extérieure (14) du corps de l'arbre (10), dans lequel les diamètres extérieurs (D1, D2, D3, D4) de ces rainures (21, 22, 23, 24) sont inférieurs au diamètre extérieur (D) de l'arbre de direction (1), et les diamètres intérieurs (d1, d2, d3, d4) desdites rainures (21, 22, 23, 24) étant inférieurs au diamètre intérieur (d) de l'arbre de direction (1).

2. Arbre de direction selon la revendication 1, **caractérisé en ce que** la géométrie d'une première rainure (21) diffère de la géométrie d'une deuxième rainure (22).

3. Arbre de direction selon l'une ou l'autre des revendications précédentes, **caractérisé en ce qu'**une première rainure (21) est à un premier écart (a1) d'une deuxième rainure (22), la deuxième rainure (22) étant à un deuxième écart (a2) d'une troisième rainure (23), le premier écart (a1) étant différent du deuxième écart (a2).

4. Arbre de direction selon l'une des revendications précédentes, **caractérisé en ce qu'**une profondeur des rainures (21, 22, 23, 24), une largeur des rainures (21, 22, 23, 24) et/ou l'espacement de deux rainures (21, 22, 23, 24) augmente ou diminue d'un côté de la section de flexion (13), qui fait face à la première extrémité de l'arbre (11), vers un côté de la section de flexion (13), qui fait face à la deuxième extrémité de l'arbre (12).

5. Arbre de direction selon l'une des revendications précédentes, **caractérisé en ce que** l'épaisseur de la paroi du corps de l'arbre (10) dans une zone de rainure d'une première rainure (21) et celle dans une zone de rainure d'une deuxième rainure (22) diffèrent l'une de l'autre.

6. Arbre de direction selon l'une des revendications précédentes, **caractérisé en ce que** la section de flexion (13) comporte au moins trois rainures (21, 22, 23, 24) qui ont chacune une profondeur différente et/ou sont espacées les unes des autres de manière différente.

7. Arbre de direction selon l'une des revendications précédentes, **caractérisé en ce que** la profondeur d'une rainure (21, 22, 23, 24) est comprise entre 0,1 et 3 fois l'épaisseur de la paroi du corps de l'arbre (10) à l'extérieur de la section de flexion (13).

8. Arbre de direction selon l'une des revendications précédentes, **caractérisé en ce que** le corps d'arbre tubulaire (10) a un diamètre de cercle enveloppant (D) et une épaisseur de paroi (s) à l'extérieur de la section de cintrage (13), un diamètre de cercle enveloppant (HK) de la section de cintrage (13) étant inférieur ou égal à la somme du diamètre de cercle enveloppant (D) du corps d'arbre tubulaire (10) et de deux fois l'épaisseur de paroi (s) du corps d'arbre tubulaire (10).

9. Procédé de fabrication d'un arbre de direction selon l'une des revendications 1 à 8 pour un véhicule, comprenant les étapes suivantes:
- La fourniture d'un tube qui s'étend le long d'un axe longitudinal (L) avec un diamètre de cercle enveloppant (D) et une épaisseur de paroi (s);
- la formation du tube afin de configurer un corps d'arbre tubulaire (10) d'un arbre de direction (1) avec une section de flexion (13) qui est disposée entre une première extrémité d'arbre (11) et une deuxième extrémité d'arbre (12) du corps d'arbre (10),
une pluralité de rainures (21, 22, 23, 24) qui s'étendent dans la direction circonférentielle du corps de l'arbre (10) étant formées dans une face circonférentielle (14) du tube par laminage d'au moins un rouleau (30, 31, 32, 33, 34), dans lequel le diamètre du cercle enveloppant (HK) de la section de cintrage (13) est inférieur ou égal à la somme du diamètre du cercle enveloppant (D) du tube et de deux fois l'épaisseur de la paroi (s).

10. Procédé selon la revendication 9, **caractérisé en ce que** la section de flexion (13) comporte plusieurs rainures (21, 22, 23, 24) qui s'étendent dans la direction circonférentielle du corps de l'arbre (10) pour la formation d'une structure de rainures, la structure de rainures étant de configuration non uniforme dans la direction de l'axe longitudinal (L).

11. Procédé selon la revendication 9 ou 10, **caractérisé en ce que** les rainures (21, 22, 23, 24) sont formées au moyen d'un rouleau (30), au moins une première rainure (21) étant formée dans une première position longitudinale du rouleau (30), et une seconde rainure (22) étant formée dans une seconde position longitudinale du rouleau (30), cette seconde position longitudinale étant espacée axialement de ladite première position longitudinale,
- le rouleau (30) étant avancé de manière différente sur la face circonférentielle (14) du tube dans la première et la deuxième position longitudinale,
et/ou
- les positions longitudinales du rouleau (30) étant plus ou moins espacées les unes des autres.

12. Procédé selon la revendication 11, **caractérisé en ce que** les rainures (21, 22, 23, 24) sont formées au moyen d'au moins deux rouleaux (31, 32, 33, 34) espacés axialement l'un de l'autre, disposés notamment le long d'un axe de roulement commun (R), et présentant les caractéristiques suivantes
- une géométrie de rouleau différente,
et/ou
- différents écartements (a1, a2) entre un premier rouleau (31) et un deuxième rouleau (32) et entre le deuxième rouleau (32) et un troisième rouleau (33).

13. Procédé selon l'une des revendications 9 à 12, **caractérisé en ce que** la longueur du tube est identique avant et après le formage.
